# EUROPEAN PATENT SPECIFICATION

(11) **EP 3 929 449 B1**
(45) Date of publication and mention of the grant of the patent: **29.11.2023**
(21) Application number: 21180734.2
(22) Date of filing: 22.06.2021
(51) Int. Cl.: F16B 5/06, F24F 1/00, F24F 13/20, B60H 1/00, F16B 21/08, F16B 5/00

(54) **CONNECTION DEVICE FOR CONNECTING TWO FLAT PARTS TOGETHER WITHOUT AIR LEAKAGE**
VERBINDUNGSVORRICHTUNG ZUM VERBINDEN ZWEIER FLACHER TEILE MITEINANDER OHNE LUFTAUSTRITT
DISPOSITIF DE CONNEXION POUR RELIER DEUX PIÈCES PLATES SANS FUITE D'AIR

(30) Priority: 24.06.2020 IT 202000015187
(43) Date of publication of application: 29.12.2021
(73) Proprietor: DENSO THERMAL SYSTEMS S.p.A., 10046 Poirino (Torino) (IT)
(72) Inventor: BORGHI, Antonello, 10046 Poirino (Torino) (IT); DESOGUS, Alessandro, 10046 Poirino (Torino) (IT)
(74) Representative: Vanzini, Christian

(56) References cited:
- EP-A1- 1 514 706
- DE-A1-102005 030 443
- DE-A1-102013 104 261

## Description

The present invention relates generally to techniques for assembling plastic material components.

Some of the most commonly used fastening systems include the use of additional elements such as screws. In this regard, there is a need for fastening systems that do not require these additional elements; the reduction in the number of components involved leads to savings in terms of both money and time, since the assembly of additional elements is not required and there is no need to use specific equipment for the assembly of these elements.

An alternative solution to the use of additional elements is conventionally based on the use of clip systems, in which a clip and a coupling seat for the clip are respectively formed on the parts that are to be assembled together. In the case of flat parts, the problem arises of finding an area where the coupling seat for the clip may be made. If these parts are involved in the treatment or conveyance of air, such as, for example, in the case of parts of air conditioning systems, a seal against air leakage is in effect required.

Undercuts may be made in the part by means of molding equipment to create the coupling seats; this solution is often difficult or very expensive to implement.

An alternative would be to make the coupling seat in a through-opening formed directly in the wall of the flat part. Obviously, creating an opening is undesirable from the standpoint of sealing against air leakage.

DE 10 2013 104261 A1 discloses an arrangement of two flat parts of plastic material and a connection device for connecting the flat parts of the prior art.

One object of the present invention is to provide a solution to the above mentioned problem.

For this purpose, the object of the invention is defined by claim 1.

According to the invention, a clip coupling seat is thus created in a through opening, where, however, air leakage is eliminated or at least greatly reduced by the presence of the labyrinth around said opening.

Further features and advantages of the connection device according to the invention will become clearer from the following detailed description of an embodiment of the invention, made in reference to the accompanying drawings, provided purely for illustrative and nonlimiting purposes, wherein:
Fig. 1 is a partial view of a box equipped with the connection device according to the invention;
Fig. 2 is a cross-sectional view taken at the connection device;
Fig. 3 and 4 are enlarged scale views of details of Fig. 2;
Fig. 5 and 6 are cross-sectional views, taken at the connection device, of the two separate parts of the box in Fig. 1.

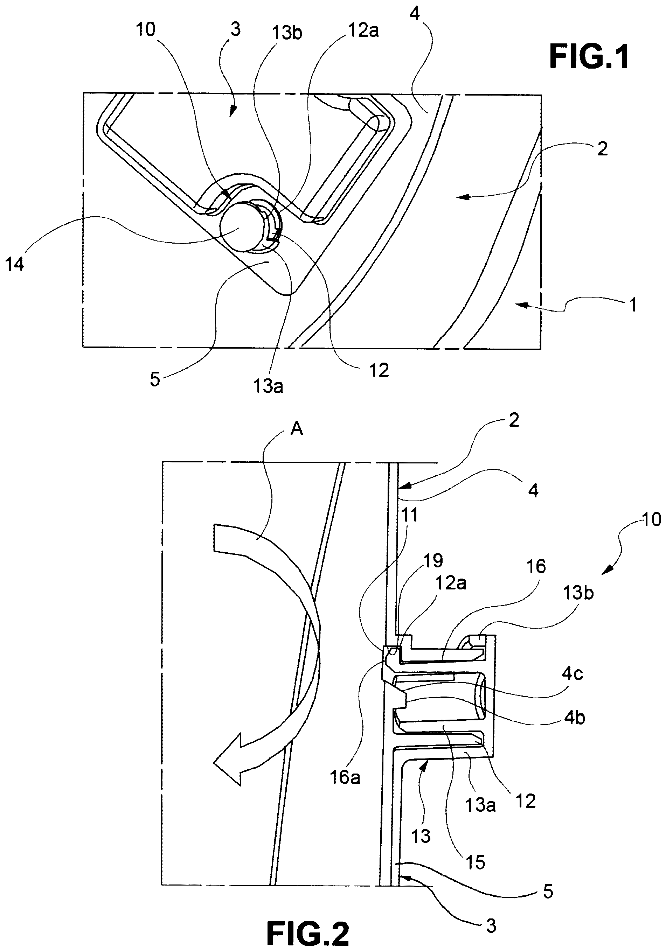

Fig. 1 depicts a box 1, in particular a box of an air conditioning unit for a vehicle, as an example of application of a connection device according to the invention.

The box 1 comprises two flat parts 2 and 3 of plastic material, assembled together. For the purposes of the present invention, it is understood that parts 2 and 3 are flat in the vicinity of the area where they are fastened together. Other portions of the two parts 2, 3 may even have complex three-dimensional shapes. The two parts 2, 3 have respective walls 4 and 5, which hereinafter for convenience will be referred to as first wall and second wall, and which in the assembled condition are arranged one against the other, or abutting each other, as may be seen in Fig. 2-4.

The two parts 2, 3 are held together by means of a connection device 10, illustrated more clearly in Fig. 2 to 6.

The device 10 comprises a through opening 11 formed through the first wall 4 and a first collar formation 12 protruding from the first wall 4. The first collar formation 12 may be formed in one part with the first wall 4. The first collar formation 12 encloses an area of the first wall 4 within which the through opening 11 is formed.

The first collar formation 12 has a circular cross section and extends continuously, i.e., as a continuous wall without openings, for 360° in the circumferential direction.

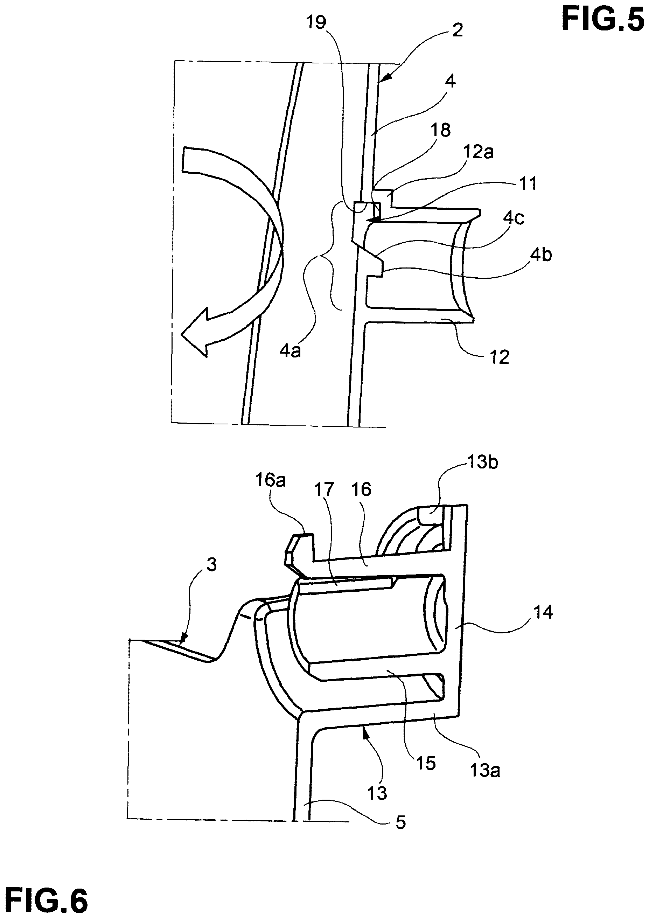

The through opening 11 has a smaller surface area than the area 4a of the first wall 4 enclosed by the first collar formation 12 (in this regard see Fig. 5). In other words, the extent of the through opening is less than the cross section of the cavity delimited by the first collar formation 12. The cavity delimited by the first collar formation 12 is therefore nearly blind, except for the passageway provided by the through opening 11.

The through opening 11 is arranged peripherally, i.e., not centrally, with respect to the area 4a of the first wall 4a enclosed by the first collar formation 12. On a radially inner edge of the through opening 11, i.e., approximately at the center of the area 4a, a guide formation 4b protruding from the first wall 4 is formed. On the guide formation 4b a ramp 4c is formed, which slopes down toward the through opening 11. The object of the guide formation 4b will be clarified below.

The connection device 10 further comprises a second collar formation 13 protruding from the second wall 5, a flat closure portion 14 connected to the second wall 5 through the second collar formation 13, a third collar formation 15 protruding from the closure portion 14, and a clip 16 formed on the third collar formation 15. The second collar formation 13, closure portion 14, third collar formation 13 and clip 16 may be formed in one piece with the second wall 5. The third collar formation 15 extends coaxially with the second collar formation 13 and has a smaller diameter than the second collar formation 13. The third collar formation 15 is therefore arranged radially within the second collar formation 13. A gap adapted to receive the first collar formation 12 is formed between the third collar formation 15 and the second collar formation 13.

The second collar formation 13 has a circular cross section and comprises a first sector 13a that connects the closure portion 14 to the second wall 5, and a second sector 13b that extends from the closure portion 14 and has a smaller axial extent than the first sector 13a.

First and second sectors 13a, 13b are connected to each other in such a way that the second collar formation 13 forms a continuous wall without openings. The closure portion 14 also forms a continuous wall without openings.

The clip 16 protrudes axially beyond the third collar formation 15 and has an end tooth 16a at its free end. The clip is delimited on opposite sides by a pair of slots 17 formed in the third collar formation 15, only one of which is visible in Fig. 6.

The third collar formation 15 extends continuously for 360°, except for the width of the slots 17, in the circumferential direction. In other words, the third collar formation 15 forms a continuous wall with no openings beyond the slots 17.

In the assembled condition of the two parts 2 and 3, the clip 16 snap-fits with a coupling seat 18 formed at the through opening 11 of the first wall 4, and the first collar formation 12 of the first wall 4 is inserted into the gap between the second collar formation 13 and the third collar formation 15 of the second wall 5 so as to define a labyrinth passage between the first wall 4 and the second wall 5. In the assembly operation of the parts 2 and 3, the guide formation 4b facilitates the coupling between the clip 16 and the seat 18 by acting as a guide for the free end of the clip 16.

The coupling seat 18 is formed at the base of the first collar formation 12. More specifically, the coupling seat 18 is formed at a step 19 lowered with respect to the first wall 4. In the illustrated example, the step 19 is formed on the inner side of a rib 12a made at the base of the first collar formation 12.

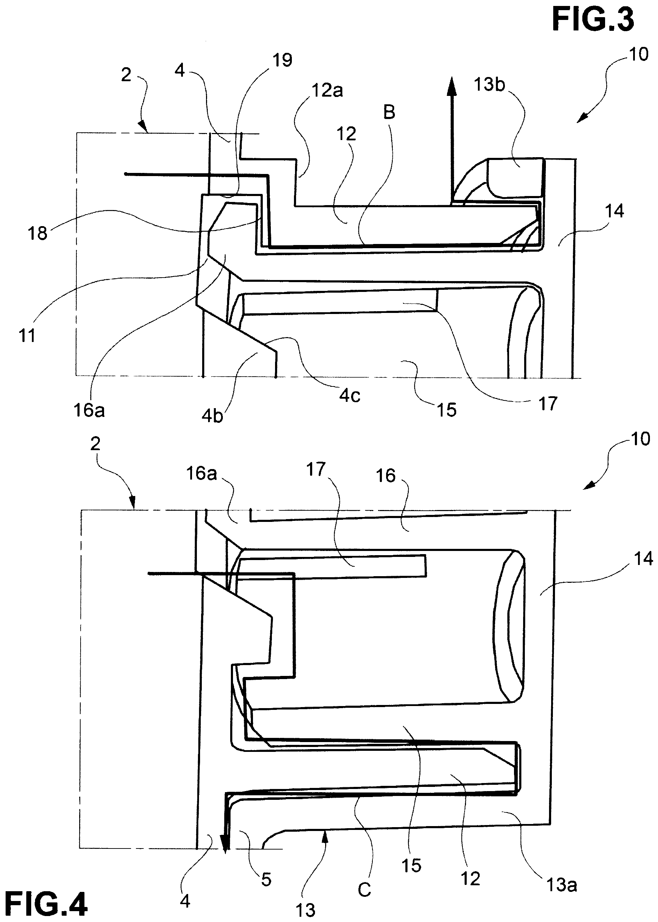

The arrow A drawn in Fig. 2 represents the main airflow inside the box formed of the parts 2 and 3. A part of this airflow tends to leak via the through opening 11 formed in the first wall 4. As may be seen in Fig. 3 and 4, the labyrinth defined between the walls 4 and 5 makes the air passage tortuous (indicated by the arrows B and C) and therefore greatly reduces the air leakage through the connection device 10. By sizing the parts appropriately, this leakage may be reduced to an optimal level.

It is understood that the invention is not limited to the embodiments described and shown here, but instead may be subject to modifications relating to the shape and arrangement of parts and design and operating details, according to the numerous possible variants that will appear appropriate to those skilled in the art, and which are to be understood as included within the scope of the invention, as defined by the following claims.

## Claims

1. Two flat parts (2,3) of plastic material and a connection device (10) for connecting the flat parts (2, 3) to each other, said flat parts comprising a first wall (4) and a second wall (5), respectively, that, in an assembled condition of the two flat parts (2, 3), are arranged against each other,
wherein said connection device comprises
a through opening (11) formed through the first wall (4) and a first collar formation (12) protruding from the first wall (4), said first collar formation enclosing an area (4a) of the first wall (4) within which the through opening (11) is formed, and
a second collar formation (13) protruding from the second wall (5),
wherein said connection device further comprises a flat closure portion (14) connected to the second wall (5) through the second collar formation (13), a third collar formation (15) protruding from the closure portion (14) coaxially with the second collar formation (13), and a clip (16) formed on the third collar formation (15),
wherein, in the assembled condition of the two flat parts (2, 3), the clip (16) is configured to snap-fit with a coupling seat (18) formed at the through opening (11) of the first wall (4), and the first collar formation (12) of the first wall (4) is configured to be inserted between the second collar formation (13) and the third collar formation (15) of the second wall (5) in such a way to define a labyrinth passage between the first wall (4) and the second wall (5).

2. The flat parts and the connection device according to claim 1, wherein the through opening (11) has a surface extent smaller than the area (4a) of the first wall (4) enclosed by the first collar formation (12).

3. The flat parts and the connection device according to claim 1, wherein the through opening (11) is arranged peripherally relative to the area (4a) of the first wall (4) enclosed by the first collar formation (12).

4. The flat parts and the connection device according to claim 3, wherein on a radially inner edge of the through opening (11) there is formed a guide formation (4b) protruding from the first wall (4).

5. The flat parts and the connection device according to any of the preceding claims, wherein said coupling seat is formed at the base of the first collar formation (12).

6. The flat parts and the connection device according to claim 5, wherein said coupling seat is formed at a step (19) recessed relative to the first wall (4).

7. The flat parts and the connection device according to any of the preceding claims, wherein the first collar formation (12) extends continuously for 360° in the circumferential direction.

8. The flat parts and the connection device according to any of the preceding claims, wherein the clip (16) protrudes axially beyond the third collar formation (15), and wherein the clip (16) is delimited on opposite sides by a pair of slots (17) formed in the third collar formation (15).

9. The flat parts and the connection device according to claim 8, wherein the third collar formation (15) extends continuously for 360°, comprising the width of said slots, in the circumferential direction.

10. The flat parts and the connection device according to any of the preceding claims, wherein the second collar formation (13) comprises a first sector (13a) connecting the closure portion (14) to the second wall (5), and a second sector (13b) having an axial extent smaller than the first sector (13a).

## Patentansprüche

1. Zwei Flachteile (2, 3) aus Kunststoff und eine Verbindungsvorrichtung (10) zum Verbinden der Flachteile (2,3) miteinander, wobei die Flachteile eine erste Wand (4) bzw. eine zweite Wand (5) umfassen, die in einem montierten Zustand der beiden Flachteile (2, 3) aneinander angeordnet sind,
wobei die Verbindungsvorrichtung umfasst:
eine Durchgangsöffnung (11), die durch die erste Wand (4) hindurch ausgebildet ist, und eine erste Manschetten- bzw. Kragenformation (12), die von der ersten Wand (4) vorsteht, wobei die erste Kragenformation einen Bereich (4a) der ersten Wand (4) umschließt, in dem die Durchgangsöffnung (11) ausgebildet ist, und
eine zweite Manschetten- bzw. Kragenformation (13), die von der zweiten Wand (5) vorsteht,
wobei die Verbindungsvorrichtung ferner einen flachen Verschlussabschnitt (14), der über die zweite Kragenformation (13) mit der zweiten Wand (5) verbunden ist, eine dritte Manschetten- bzw. Kragenformation (15), die koaxial zu der zweiten Kragenformation (13) von dem Verschlussabschnitt (14) vorsteht, und einen Clip (16), der an der dritten Kragenformation (15) ausgebildet ist, umfasst,
wobei der Clip (16) in dem montierten Zustand der beiden Flachteile (2, 3) konfiguriert ist, mit einem bzw. in einen an der Durchgangsöffnung (11) der ersten Wand (4) ausgebildeten Kopplungssitz (18) einzurasten bzw. einzuschnappen, und die erste Kragenformation (12) der ersten Wand (4) konfiguriert ist, zwischen der zweiten Kragenformation (13) und der dritten Kragenformation (15) der zweiten Wand (5) derart eingesetzt zu werden, dass sie einen Labyrinthdurchgang zwischen der ersten Wand (4) und der zweiten Wand (5) definiert.

2. Flachteile und Verbindungsvorrichtung nach Anspruch 1, wobei die Durchgangsöffnung (11) eine geringere Flächenausdehnung aufweist als die Fläche (4a) der ersten Wand (4), die von der ersten Kragenformation (12) umschlossen ist.

3. Flachteile und Verbindungsvorrichtung nach Anspruch 1, wobei die Durchgangsöffnung (11) peripher bzw. umfangsmäßig relativ zu der Fläche (4a) der ersten Wand (4) angeordnet ist, die von der ersten Kragenformation (12) umschlossen ist.

4. Flachteile und Verbindungsvorrichtung nach Anspruch 3, wobei an einer radial inneren Kante der Durchgangsöffnung (11) eine Führungsformation (4b) ausgebildet ist, die von der ersten Wand (4) vorsteht.

5. Flachteile und Verbindungsvorrichtung nach einem der vorhergehenden Ansprüche, wobei der Kopplungssitz an der Basis der ersten Kragenformation (12) ausgebildet ist.

6. Flachteile und Verbindungsvorrichtung nach Anspruch 5, wobei der Kopplungssitz an einer Stufe (19) ausgebildet ist, die relativ zu der ersten Wand (4) ausgespart bzw. zurückgesetzt ist.

7. Flachteile und Verbindungsvorrichtung nach einem der vorhergehenden Ansprüche, wobei sich die erste Kragenformation (12) durchgehend für bzw. über 360° in der Umfangsrichtung erstreckt.

8. Flachteile und Verbindungsvorrichtung nach einem der vorhergehenden Ansprüche, wobei der Clip (16) axial über die dritte Kragenformation (15) hinausragt, und wobei der Clip (16) auf gegenüberliegenden bzw. entgegengesetzten Seiten durch ein Paar Schlitze (17) begrenzt ist, die in der dritten Kragenformation (15) ausgebildet sind.

9. Flachteile und Verbindungsvorrichtung nach Anspruch 8, wobei sich die dritte Kragenformation (15) durchgehend für bzw. über 360°, umfassend die Breite der Schlitze, in der Umfangsrichtung erstreckt.

10. Flachteile und Verbindungsvorrichtung nach einem der vorhergehenden Ansprüche, wobei die zweite Kragenformation (13) einen ersten Sektor (13a), der den Verschlussabschnitt (14) mit der zweiten Wand (5) verbindet, und einen zweiten Sektor (13b) umfasst, der eine geringere axiale Erstreckung bzw. Ausdehnung als der erste Sektor (13a) aufweist.

## Revendications

1. Deux pièces plates (2, 3) de matière plastique et dispositif de liaison (10) pour relier les pièces plates (2, 3) l'une à l'autre, lesdites pièces plates comprenant une première paroi (4) et une seconde paroi (5), respectivement, qui, dans un état assemblé des deux pièces plates (2, 3), sont agencées l'une contre l'autre,
dans lesquels ledit dispositif de liaison comprend
une ouverture traversante (11) formée à travers la première paroi (4) et une première formation de collier (12) faisant saillie à partir de la première paroi (4), ladite formation de collier entourant une zone (4a) de la première paroi (4) dans laquelle l'ouverture traversante (11) est formée, et
une deuxième formation de collier (13) faisant saillie à partir de la seconde paroi (5),
dans lesquels ledit dispositif de liaison comprend en outre une partie de fermeture (14) plate reliée à la seconde paroi (5) par le biais de la deuxième formation de collier (13), une troisième formation de collier (15) faisant saillie à partir de la partie de fermeture (14) de manière coaxiale avec la deuxième formation de collier (13), et une attache (16) formée sur la troisième formation de collier (15),
dans lesquels, dans l'état assemblé des deux pièces plates (2, 3), l'attache (16) est configurée pour s'encliqueter avec un siège d'accouplement (18) formé au niveau de l'ouverture traversante (11) de la première paroi (4), et la première formation de collier (12) de la première paroi (4) est configurée pour être insérée entre la deuxième formation de collier (13) et la troisième formation de collier (15) de la seconde paroi (5) de manière à définir un passage labyrinthique entre la première paroi (4) et la seconde paroi (5).

2. Pièces plates et dispositif de liaison selon la revendication 1, dans lesquels l'ouverture traversante (11) a une étendue de surface plus petite que la zone (4a) de la première paroi (4) entourée par la première formation de collier (12).

3. Pièces plates et dispositif de liaison selon la revendication 1, dans lesquels l'ouverture traversante (11) est agencée de manière périphérique par rapport à la zone (4a) de la première paroi (4) entourée par la première formation de collier (12).

4. Pièces plates et dispositif de liaison selon la revendication 3, dans lesquels sur un bord intérieur radialement de l'ouverture traversante (11) est formée une formation de guide (4b) faisant saillie à partir de la première paroi (4).

5. Pièces plates et dispositif de liaison selon l'une quelconque des revendications précédentes, dans lesquels ledit siège d'accouplement est formé à la base de la première formation de collier (12).

6. Pièces plates et dispositif de liaison selon la revendication 5, dans lesquels ledit siège d'accouplement est formé à un échelon (19) en creux par rapport à la première paroi (4).

7. Pièces plates et dispositif de liaison selon l'une quelconque des revendications précédentes, dans lesquels la première formation de collier (12) s'étend de manière continue sur 360° dans la direction circonférentielle.

8. Pièces plates et dispositif de liaison selon l'une quelconque des revendications précédentes, dans lesquels l'attache (16) fait saillie axialement au-delà de la troisième formation de collier (15), et dans lesquels l'attache (16) est délimitée sur des côtés opposés par une paire de fentes (17) formées dans la troisième formation de collier (15).

9. Pièces plates et dispositif de liaison selon la revendication 8, dans lesquels la troisième formation de collier (15) s'étend de manière continue sur 360°, comprenant la largeur desdites fentes, dans la direction circonférentielle.

10. Pièces plates et dispositif de liaison selon l'une quelconque des revendications précédentes, dans lesquels la deuxième formation de collier (13) comprend un premier secteur (13a) reliant la partie de fermeture (14) à la seconde paroi (5), et un second secteur (13b) ayant une étendue axiale plus petite que le premier secteur (13a).
